# EUROPÄISCHE PATENTSCHRIFT

(11) **EP 1 340 016 B1**
(45) Veröffentlichungstag und Bekanntmachung des Hinweises auf die Patenterteilung: **15.09.2004**
(21) Anmeldenummer: 01994667.2
(22) Anmeldetag: 15.11.2001
(51) Int. Cl.: F16L 55/05

(54) **PULSATIONSDÄMPFER**
PULSATION DAMPER
AMORTISSEUR DE PULSATIONS

(30) Priorität: 08.12.2000 DE 10061188
(43) Veröffentlichungstag der Anmeldung: 03.09.2003
(73) Patentinhaber: KNF FLODOS AG, 6210 Sursee (CH)
(72) Erfinder: KÄCH, Robert, CH-6210 Sursee (CH)
(74) Vertreter: Maucher, Wolfgang, Dipl.-Ing.
(86) Internationale Anmeldenummer: PCT/EP2001/013224
(87) Internationale Veröffentlichungsnummer: WO 2002/046657

(56) Entgegenhaltungen:
- US-A- 3 035 613
- US-A- 3 169 551
- US-A- 3 867 963

## Beschreibung

Die Erfindung bezieht sich auf einen Pulsationsdämpfer mit einem Einlaßstutzen, einem Auslaßstutzen und einer diese verbindenden Leitung, die innerhalb des Pulsationsdämpfers an mehrere Dämpfungskammern angeschlossen ist, die innerhalb eines Dämpfer-Gehäuses vorgesehen sind, wobei ein an den Einlaßstutzen angeschlossener Leitungsabschnitt mit den Dämpfungskammern verbunden ist, in denen federelastische Dämpfungselemente angeordnet sind

Pulsationsdämpfer haben die Aufgabe, Druckschwankungen zu reduzieren, welche zum Beispiel von einer oszillierenden Verdrängerpumpe erzeugt werden. Oszillierende Pumpen haben die Charakteristik, daß sie nur während 180° einer Umdrehung Flüssigkeit oder Gas als Fördermedium fördern und dadurch Pulsationen verursachen. Bei langsam laufenden Pumpen führt dies zu einem entsprechend unregelmäßigen Förderstrom, während bei schnellaufenden Pumpen Druckschwankungen auftreten. In vielen Anwendungsfällen ist dies unerwünscht.

Es sind bereits Pulsationsdämpfer in unterschiedlichen Ausführungsformen bekannt.
Aus der DE 1 963 709 ist ein Dämpfer bekannt, mit dem Druckschläge in Leitungsnetzen verhindert oder reduziert werden sollen. Dazu weist diese Vorrichtung eine Dämpfungskammer auf, in der ein elastisch nachgiebiges Bauteil eingesetzt ist. Damit können in Leitungsnetzen auftretende Druckschläge, die beim Schließen von daran angeschlossenen Auslaufarmaturen auftreten, gedämpft werden. In Verbindung mit oszillierenden Verdrängerpumpen ergeben solche Dämpfer keine genügende Glättung des Förderstromflußes beziehungsweise der auftretenden Druckpulsation.

Aus der US-A-3 035 613 ist ebenfalls ein Dämpfer für Rohrleitungen bekannt, der insbesondere zur Dämpfung von Druckschwankungen in Pipelines einsetzbar ist. Es sind dabei entlang eines Leitungsabschnitts Dämpfungskammern angeordnet, die ringförmige Dämpfungselemente aus elastischem Material mit einer Füllung zum Beispiel aus Luft enthalten.
Auch dieser Dämpfer ergibt in Verbindung mit.oszillierenden Verdrängerpumpen keine ausreichende Glättung des Förderstromflußes beziehungsweise der auftretenden. Druckpulsation.

Aufgabe der vorliegenden Erfindung ist es, einen Pulsationsdämpfer zu schaffen, der insbesondere in Verbindung mit einer oszillierenden Verdrängerpumpe eine hohe Dämpfung der auftretenden Druckschwankungen ermöglicht. Dabei soll bedarfsweise eine einfache Anpassung an Pumpen mit unterschiedlicher Fördermenge und/oder an unterschiedliche Systemdrücke möglich sein. Schließlich soll der Pulsationsdämpfer einfach und kompakt im Aufbau sein.

Zur Lösung dieser Aufgabe wird vorgeschlagen, daß der Pulsationsdämpfer für eine oszillierende Verdrängerpumpe vorgesehen ist und wenigsten zwei in Serie geschaltete Dämpfungskammern innerhalb des Dämpfer-Gehäuses aufweist, dass der an den Einlaßstutzen angeschlossene Leitungsabschnitt einen Verbindungskanal zu einer ersten Dämpfungskammer aufweist sowie über ein Einlaß-Drosselorgan an eine zweiten, über ein Auslaß-Drosselorgan mit dem Auslaßstutzen verbundene Dämpfungskammer angeschlossen ist, und daß die Dämpfungskammern mittels einer Trennmembrane in einen Aufnahmeraum für Dämpfungselemente aus federelastischem Material und in einen Fördermedium führenden Bereich unterteilt sind.
Durch die Reihenschaltung von mehreren Dämpferstufen wird eine hohe Dämpfung erreicht, die exponentiell mit der Anzahl der Dämpferstufen steigt. Die Drosselorgane in Verbindung mit den Dämpfungskammern bilden Dämpfungsglieder, die bei auftretenden Druckschwankungen Fördermedium zwischenspeichern und wieder abgeben können. Durch die Drosselorgane wird während eines Druckstoßes ein Staudruck aufgebaut, durch den eine Druckaufladung der Dämpfungsglieder und eine gedrosselte Abgabe von Fördermedium in der sich an die Druckphase anschließenden Druckabfallphase möglich ist.
Über den Durchlaßquerschnitt der Drosselorgane ist: eine Anpassung an die gewünschte Dämpfung beziehungsweise die zulässige Restpulsation nach dem Dämpfer möglich. Ebenso kann der Staudruck und damit der auftretende Druckverlust des Dämpfers durch die Drosselorgane eingestellt werden. Damit kann der Dämpfer an eine Vielzahl von Pumpentypen mit unterschiedlichen Fördermengen und/oder Systemdrücken ohne weitere Änderungen angepaßt werden.
Durch die Unterteilung der Dämpfungskammern mittels einer Trennmembrane in einen Aufnahmeraum für Dämpfungselemente und in einen Fördermedium führenden Bereich können die Dämpfungselemente nicht mit dem Fördermedium in Verbindung kommen, so daß die verwendeten Dämpfungselemente ausschließlich auf die geforderten Dämpfungseigenschaften abgestimmt sein können und eine Beständigkeit gegen das jeweilige Fördermedium nicht erforderlich ist. Dadurch können auch agressive Fördermedien problemlos bei entsprechender Materialwahl der Trennmembrane eingesetzt werden.

Um eine Anpassung an eine Vielzahl von Pumpentypen mit unterschiedlichen Fördermengen und/oder Systemdrücken einfach und gegebenenfalls auch nachträglich noch vornehmen zu können, sind die Ein- und Auslaß-Drosselorgane zweckmäßigerweise als auswechselbare Einsätze ausgebildet. Sie können dabei als Buchsen eingeschraubt oder eingepreßt werden.
Es können Düsen, Blenden, gestufte Düsen, Kapillare sowie einstellbare Düsen, zum Beispiel Nadelventile, verwendet werden.

Vorzugsweise weist das innerhalb des Aufnahmeraums der Dämpfungskammer für die Dämpfungselemente eingesetzte Dämpfungsmaterial eine etwa lineare Federkennlinie auf. Die federelastischen Dämpfungselemente haben somit in erwünschter Weise die Eigenschaften ähnlich einer Feder. Durch diese federelastischen Eigenschaften wird eine besonders gute Dämpfung erreicht. Beispielsweise kann ein Dämpfungsmaterial eingesetzt werden, das sich auch in einem geschlossenen Raum komprimieren läßt, was beispielsweise mit Gummi als Verdrängungsmaterial nicht möglich ist.

Nach einer Ausgestaltung der Erfindung hat die den flüssigkeitsführenden Bereich der Dämpfungskammer(n) abgrenzende, unbelastete Trennmembrane Abstand zu dem Dämpfungsmaterial.
Bei Einsatz des Dämpfers für einen geringen Systemdruck wirkt nur die weiche Trennmembrane als Federelement. Dies ermöglicht auch kleine Druckspitzen noch gut zu dämpfen. Bei höherem Systemdruck stützt sich die Trennmembrane teilweise oder vollständig auf dem Dämpfungsmaterial ab. Sie ist damit vor Überdehnung und Beschädigung geschützt und es erfolgt in diesem Betriebszustand eine Dämpfung auch durch das Dämpfungsmaterial.

Eine andere Ausgestaltung sieht vor, daß die Dämpfungselemente ein Füllvolumen aufweisen, daß größer ist als das von der Trennmembrane in unbelastetem Zustand abgegrenzte Volumen des Aufnahmeraums für die Dämpfungselemente und daß die Trennmembrane. durch die Dämpfungselemente vorgespannt ist. Bei Einsatz des Dämpfers für einen hohen Systemdruck wird die Trennmembrane durch das Dämpfungsmaterial in Gegenrichtung der Auslenkung unter Druck vorgespannt. Damit kann auch für einen großen Systemdruck ein relativ weiches Dämpfungsmaterial eingesetzt werden und die Dämpfung wird über einen großen Druckbereich optimiert.

Zweckmäßigerweise sind die Dämpfungselemente der zweiten Dämpfungskammer weichelastischer als die der ersten Dämpfungskammer. In der ersten Stufe, die härter ausgelegt ist, werden dadurch die großen Druckspitzen ausgeglichen und in der zweiten, weicheren Dämpferstufe die noch vorhandenen, restlichen Druckschwankungen.

Nach einer Ausführungsform der Erfindung weist der Pulsationsdämpfer ein zweiteiliges Gehäuse mit einem Gehäusekopf und einem Gehäuseunterteil auf, wobei in der Trennebene die Trennmembrane als Dichtelement angeordnet ist.
Die Trennmembrane bildet dadurch nicht nur die Abteilung der Dämpfungskammern in Aufnahmeraum und Fördermedium führenden Bereich, sondern dichtet die einzelnen Kammern und Kanäle auch gegeneinander und nach außen hin ab.

Vorteilhaft ist es, wenn in dem Gehäusekopf im wesentlichen der Einlaß- und der Auslaßstutzen, die Leitungskanäle, Ein- und Auslaß-Drosselorgane sowie die Fördermedium führenden Breiche der Dämpfungskammern und im Gehäuseunterteil die Aufnahmeräume für die Dämpfungselemente vorgesehen sind. Damit sind alle Funktionsbereiche des Pulsationsdämpfers nach dem Trennen von Gehäusekopf und Gehäuseunterteil gut zugänglich.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: eine Querschnittdarstellung eines Pulsationsdämpfers,
- Fig. 2: eine Aufsicht des in Fig. 1 gezeigten Pulsationsdämpfers und
- Fig. 3: eine Querschnittdarstellung eines Pulsationsdämpfers in gegenüber Fig. 1 abgewandelter Ausführungsform.

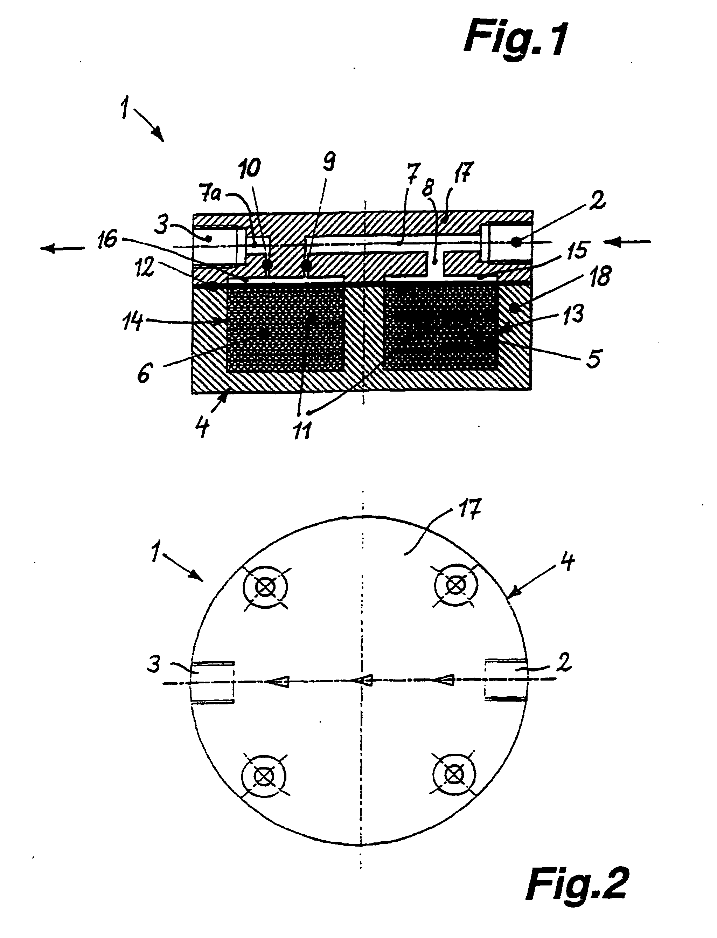

Ein in Fig. 1 gezeigter Pulsationsdämpfer 1 dient zur Dämpfung von Druckschwankungen, die von einer oszillierenden Verdrängerpumpe erzeugt werden. Der Druckstutzen einer solchen Verdrängerpumpe kann zur Dämpfung der Druckschwankungen an den Einlaßstutzen 2 des Pulsationsdämpfers 1 angeschlossen werden, um diese Druckschwankungen zu reduzieren. Das beim Einlaßstutzen 2 zugeführte Fördermedium tritt hinsichtlich der Druckschwankungen geglättet bei einem Auslaßstutzen 3 des Pulsationsdämpfers 1 aus. Der Pulsationsdämpfer 1 weist ein Gehäuse 4 auf, in dem zwei Dämpfungskammern 5, 6 vorgesehen sind. An den Einlaßstutzen 2 schließt sich ein Leitungsabschnitt 7 mit einem Abzweig 8 in die erste Dämpfungskammer 5 an. Der Leitungsabschnitt 7 ist darüberhinaus über ein Einlaß-Drosselorgan 9 an die zweite Dämpfungskammer 6 angeschlossen. Von dieser Dämpfungskammer 6 gelangt dann der Förderstrom durch ein Auslaß-Drosselorgan 10 zu dem Auslaßstutzen 3.

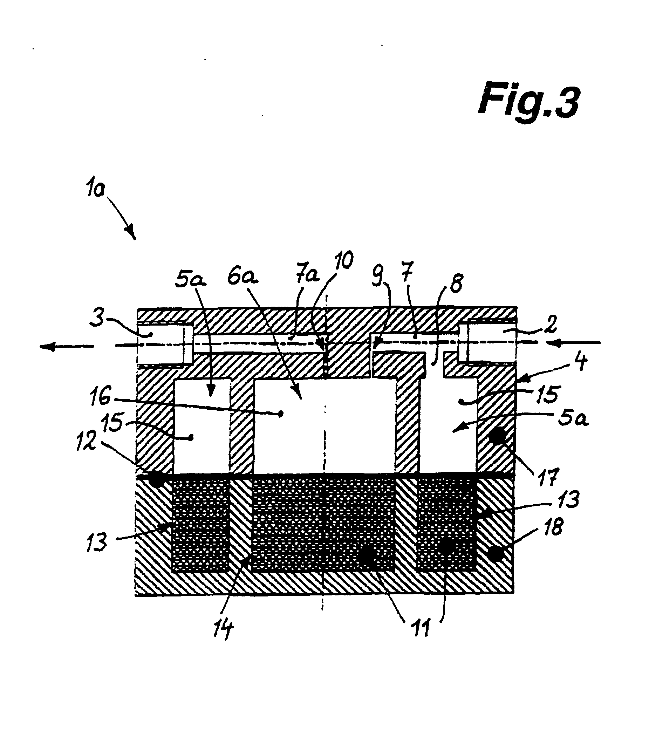

Innerhalb der Dämpfungskammern 5 und 6 sind Dämpfungselemente 11 aus federelastischem Material eingesetzt. Die Dämpfungselemente 11 befinden sich in einem durch eine Trennmembrane 12 innerhalb der jeweiligen Dämpfungskammer 5 beziehungsweise 6 abgetrennten Aufnahmeraum 13 beziehungsweise 14. Der restliche Teil der Dämpfungskammern 5, 6 oberhalb der Trennmembrane 12 ist der Fördermedium führende Bereich 15, 16.
Das lichte Volumen des Fördermedium führenden Bereichs zumindest der ersten Dämpfungskammer 5, gegebenenfalls aber auch, wie in Fig. 1 dargestellt, beider Bereiche 15, 16 entspricht wenigstens der Fördermenge eines Pumpenhubs, wobei aber auch das jeweilige Fördermedium - gasförmig oder flüssig - eine Rolle spielt.
Ein kleines Volumen der Fördermedium führenden Bereiche 15, 16 ist bei Flüssigkeiten vorgesehen, während ein größeres Volumen, wie dies in Fig. 3 gezeigt ist, bei gasförmigen Fördermedien vorgesehen ist.
Das Volumen der Aufnahmeräume 13, 14 mit dem darin befindlichen Dämpfungsmaterial entspricht einem Vielfachen, vorzugsweise etwa dem Zehnfachen der Fördermenge eines Pumpenhubs.
Wie in den Fig. 1 und 3 erkennbar, füllen die Dämpfungselemente 11 die Aufnahmeräume 13 beziehungsweise 14 vollständig aus. Trotzdem ist eine federelastische Nachgiebigkeit vorhanden, was mit einem gummiähnlichen Material nicht möglich wäre.
Das Füllvolumen der Aufnahmeräume 13 und 14 mit Dämpfungsmaterial ist im Ausführungsbeispiel so vorgesehen, daß die Aufnahmeräume bei entspannter Trennmembrane 12 gerade ausgefüllt sind.
Es besteht aber auch die Möglichkeit, daß ein geringeres Füllvolumen vorgesehen ist, so daß die den jeweiligen Ausnahmeraum 13 beziehungsweise 14 der Dämpfungskammern 5, 6 abgrenzende, unbelastete Trennmembrane 12 Abstand zu dem Dämpfungsmaterial hat. Die dann im unbelastetem Zustand freiliegende, zu dem Dämpfungsmaterial durch einen Luftspalt beabstandete Trennmembrane 12 wirkt als Federelement, das kleine Druckspitzen gut dämpfen kann. Bei höherer Druckbeaufschlagung wird die Trennmembrane 12 soweit verformt, daß sie auf den Dämpfungselementen 11 aufliegen und von diesen federnd elastisch abgestützt werden. Weiterhin besteht die Möglichkeit, daß in den Aufnahmeräumen 1 3, 14 soviel Dämpfungsmaterial eingesetzt ist, daß die Trennmembrane 12 zu den Fördermedium führenden Bereichen 15 und 16 etwas ausgelenkt und damit vorgespannt ist. Dadurch besteht die Möglichkeit, vergleichsweise weiches Dämpfungsmaterial einzusetzen und trotzdem auch bei großen Systemdrücken eine gute Dämpfung zu erzielen. Insbesondere kann dadurch über einen großen Druckbereich eine optimale Dämpfung erreicht werden. Das Vorspannen des Dämpfungsmateriales erlaubt überdies eine kompakte Bauweise des Dämpfers und die Verwendung gleicher Gehäuseteile für den Niederdruck - als auch für den Hochdruckeinsatz.
In den beiden Aufnahmeräumen 13 und 14 können auch Dämpfungselemente 11 mit unterschiedlicher Federcharakteristik eingesetzt werden, wobei es zweckmäßig ist, im Aufnahmeraum 13 der ersten Dämpfungskammer 5 ein etwas härteres Material einzusetzen als in dem Aufnahmeraum 14 der zweiten Dämpfungskammer 6. Damit können durch das erste Dämpfungsglied mit der Dämpfungskammer 5 große Druckspitzen ausgeglichen werden, während im zweiten Dämpfungsglied mit dem Dämpfungsraum 6 die noch vorhandenen, restlichen Druckschwankungen weitestgehend ausgeglichen werden.

Durch die zwei in Serie geschalteten Dämpfungskammern 5 und 6 wird auf kleinem Raum eine besonders gute Dämpfung erzielt. Während der Druckphase, die sich über etwa 180° einer Umdrehung bei einer Verdrängerpumpe ersteckt, wird ein Systemdruck aufgebaut, der durch die Einlaß- und Auslaß-Drosselorgane 9 und 10 einen Staudruck erzeugt, durch den die Trennmembrane 12 im Bereich der Dämpfungskammer 5 zu den Dämpfungselementen 11 hin ausgelenkt wird. Diese Dämpfungselemente aus federelastischem Material bauen eine Gegenlast in der gleichen Größenordnung auf. Die laufende Veränderung der Fördermenge durch die oszillierende Pumpencharakteristik beziehungsweise die dadurch auftretenden Druckschwankungen führen dazu, daß Fördermedium zwischengespeichert und wieder abgegeben wird. Wie die Druckkraft auf der Pumpenseite, welche eine Flächenlast darstellt, bauen die Dämpfungselemente die Gegenkraft ebenso als Flächenlast auf. Durch die Konstruktion und wirkungsweise als Flächenlast ist die Eigenschaft vorhanden, daß die Trennmembrane 12 bei örtlicher Belastung weich und bei Flächenbelastung hart wirkt. Daher kann diese Art des Dämpfers auch bei hohen Systemdrücken eingesetzt werden.

Im Ausführungsbeispiel ist der Pulsationsdämpfer 1, wie bereits vorerwähnt, zweistufig aufgebaut, wobei die beiden Dämpfungseinheiten in Serie geschaltet sind. Pro Stufe ist eine Reduktion der Druckamplitude um einen bestimmten Faktor möglich. Die Restpulsation der ersten Stufe wird in der zweiten Stufe nochmals reduziert. Durch die serielle Anordnung ist eine Dämpfung möglich, die mit der Abzahl der Stufen potentiell ansteigt. Durch die Unterbringung beider Dämpferstufen in einem Gehäuse 4 ist eine kompakte Bauform möglich und eine kostengünstigere Herstellung als bei Verwendung von zwei separaten, über Leitungen in Serie geschalteten Einzeldämpfern.

Das Einlaß-Drosselorgang 9 hat die Aufgabe, einen Staudruck zur Pumpe hin zu erzeugen. Während eines Druckstoßes von der Pumpe her wird durch diesen Staudruck der erste Dämpfer mit der Dämpfungskammer 5 aufgeladen und über das Einlaß-Drosselorgan 9 auch der zweite Dämpfer mit der Dämpfungskammer 6. In den Zeitabschnitten mit geringem Vordruck wird der im Dämpfer gespeicherte Fördermedium-Innhalt gedrosselt über den Auslaßstutzen 3 wieder ans System abgegeben.
Durch eine geeignete Auswahl der Durchtrittsquerschnitte des Einlaß-Drosselorgangs 9 und des Auslaß-Drosselorgans 1 0 wird die gewünschte Dämpfung beziehungsweise die zulässige Restpulsation nach dem Pulsationsdämpfer 1 erreicht. Ebenfalls läßt sich der zulässige Staudruck beziehungsweise Druckverlust des Pulsationsdämpfers 1 mit dem Durchtrittsquerschnitt der Drosselorgane einstellen. Sind die Drosselorgane als auswechselbare Einsätze ausgebildet, so kann der Pulsationsdämpfer 1 bei unveränderter Baugröße an eine Vielzahl von Pumpentypen und unterschiedlichen Durchflußmengen angepaßt werden. Im gezeigten Ausführungsbeispiel sind die Drosselorgane 9,10 nicht auswechselbar als Bohrungen ausgebildet.

Das Gehäuse 4 ist im Ausführungsbeipiel zweiteilig mit einem Gehäusekopf 17 und einem Gehäuseunterteil 18 ausgebildet, wobei in der Trennebene die Trennmembrane 12 durchgehend als Dichtelement angeordnet ist. Sie überdeckt damit beide Dämpfungskammern 5 und 6 und erstreckt sich bis an den Außenrand des Gehäuses 4, so daß die einzelnen Kammern gegeneinander und nach außen hin abgedichtet sind. Wie in Fig. 2 gezeigt, kann das Gehäuse 4 rund ausgebildet sein. Die beiden Dämpfungskammern 5 und 6 erstrecken sich dabei jeweils etwa über die Hälfte des kreisförmigen Querschnittes. Der Gehäusekopf 17 und das Gehäuseunterteil 18 werden im Ausführungsbeispiel durch 4 Schrauben zusammengehalten.

Im Gehäusekopf sind Ein- und Auslaßstutzen 2 bzw. 3 diametral gegenüberliegend angeordnet, wobei sich an den Einlaßstutzen 2 der Leitungsabschnitt 7 und an den Auslaßstutzen 3 ein Leitungsabschnitt 7a anschließen. Letzterer ist über das Aulaß-Drosselorgan 10 mit der zweiten Dämpfungskammer 6 verbunden. Von dem Leitungsabschnitt 7 geht der Abzweig 8 zur ersten Dämpfungskammer 5 und das Einlaß-Drosselorgan 9 führt von dem Leitungsabschnitt 7 in die zweite Dämpfungskammer 6.

Fig. 3 zeigt eine abgewandelte Ausführungsform eines Pulsationsdämpfers 1a, bei dem die erste Dämpfungskammer 5a konzentrisch um die zweite zentral angeeordnete Dämpfungskammer 6a herum angeordnet ist und somit eine Ringkammer bildet. Prinzipiell entspricht aber der Aufbau dieses Pulsationsdämpfers 1a dem in Fig. 1 dargestellten.

## Patentansprüche

1. Pulsationsdämpfer mit einem Einlaßstutzen, einem Auslaßstutzen (3) und einer diese verbindenden Leitung, die innerhalb des Pulsationsdämpfers an mehrere Dämpfungskammern angeschlossen ist, die innerhalb eines Dämpfer-Gehäuses (4) vorgesehen sind, wobei ein an den Einlaßstutzen (2) angeschlossener Leitungsabschnitt mit den Dämpfungskammern verbunden ist, in denen federelastische Dämpfungselemente (11) angeordnet sind, **dadurch gekennzeichnet, daß** der Pulsationsdämpfer für eine oszillierende Verdrängerpumpe vorgesehen ist und wenigsten zwei in Serie geschaltete Dämpfungskammern (5,5a,6,6a) innerhalb des Dämpfer-Gehäuses (4) aufweist, dass der an den Einlaßstutzen (2) angeschlossene Leitungsabschnitt (7) einen Verbindungskanal zu einer ersten Dämpfungskammer (5,5a) aufweist sowie über ein Einlaß-Drosselorgan (9) an eine zweiten,. über ein Auslaß-Drosselorgan (10) mit dem Auslaßstutzen (3) verbundene Dämpfungskammer (6,6a) angeschlossen ist, und daß die Dämpfungskammern (5,5a,6,6a) mittels einer Trennmembrane (12) in einen Aufnahmeraum (13,14) für Dämpfungselemente (11) aus federelastischem Material und in einen Fördermedium führenden Bereich (15,16) unterteilt sind.

2. Pulsationsdämpfer nach Anspruch 1, **dadurch gekennzeichnet, daß** das lichte Volumen des Fördermedium führenen Bereichs (15,16) zumindest der ersten Dämpfungskammer (5,5a) zumindest der Fördermenge eines Pumpenhubs entspricht.

3. Pulsationsdämpfer nach einem der Ansprüche 1 bis 2, **dadurch gekennzeichnet, daß** das innerhalb des Aufnahmeraums (13,14) der Dämpfungskammern (5,5a,6,6a) für die Dämpfungselemente (11) eingesetzte Dämpfungsmaterial eine etwa lineare Federkennlinie aufweist.

4. Pulsationsdämpfer nach einem der Ansprüche 1 bis 3, **dadurch gekennzeichnet, daß** das Volumen der Dämpfungselemente (11) einem Vielfachen, vorzugsweise dem etwa Zehnfachen der Fördermenge eines Pumpenhubs entspricht.

5. Pulsationsdämpfer nach einem der Ansprüche 2 bis 4, **dadurch gekennzeichnet, daß** die den Fördermedium führenen Bereich (e) (15,16) der Dämpfungskammer(n) (5,5a,6,6a) abgrenzende, unbelastete Trennmembrane (n) (12) Abstand zu dem Dämpfungsmaterial (11) hat.

6. Pulsationsdämpfer nach einem der Ansprüche 2 bis 5, **dadurch gekennzeichnet, daß** die Dämpfungselemente (11) ein Füllvolumen aufweisen, das größer ist als das von der Trennmembrane (12) in unbelastetem Zustand abgegrenzte Volumen des Aufnahmeraums (13,14) für die Dämpfungselemente (11) und daß die Trennmembrane (12) durch die Dämpfungselemente (11) vorgespannt ist.

7. Pulsationsdämpfer nach einem der Ansprüche 1 bis 6, **dadurch gekennzeichnet, daß** die Dämpfungselemente (11) der zweiten Dämpfungskammer (6,6a) weichelastischer als die der ersten Dämpfungskammer (5,5a) sind.

8. Pulsationsdämpfer nach einem der Ansprüche 1 bis 7, **dadurch gekennzeichnet, daß** er ein zweiteiliges Gehäuse (4) mit einem Gehäusekopf (17) und einem Gehäuseunterteil (18) aufweist und daß in der Trennebene die Trennmembrane (12) als Dichtelement angeordnet ist.

9. Pulsationsdämpfer nach Anspruch 8, **dadurch gekennzeichnet, daß** in dem Gehäusekopf (17) im wesentlichen der Einlaß- und der Auslaßstutzen (2,3), die Leitungskanäle (7,7a), Einund Auslaß-Drosselorgane (9,10) sowie die Fördermedium führenen Bereiche (15,16) der Dämpfungskammern (5, 5a, 6, 6a) und im Gehäuseunterteil (18) die Aufnahmeräume (13,14) für die Dämpfungselemente (11) vorgesehen sind.

10. Pulsationsdämpfer nach einem der Ansprüche 1 bis 9, **dadurch gekennzeichnet, daß** das Dämpfer-Gehäuse (4) vorzugsweise rund ausgebildet ist, daß die Einlaß- und Auslaßstutzen (2,3) diametral gegenüberliegend angeordnet sind und jeweils nach innen gerichtete, vorzugsweise fluchtende Sackbohrungen (7,7a) aufweisen, daß die Dämpfungselemente-Aufnahmeräume (13,14) sich jeweils etwa über die Hälfte der Gehäuse-Grundfläche erstrecken und daß die mit dem Einlaßstutzen (2) verbundene Sackbohrung (7) sich bis in den Bereich der zweiten Dämpfungskammer (6,6a) erstreckt und mit beiden Dämpfungskammern (5, 5a, 6, 6a) verbunden ist und die mit dem Auslaßstutzen (3) verbunden Sackbohrung (7a) mit der zweiten Dämpfungskammer (6,6a) über das Auslaß-Drosselorgan (10) verbunden ist.

11. Pulsationsdämpfer nach einem der Ansprüche 1 bis 10, **dadurch gekennzeichnet, daß** die erste Dämpfungskammer (5a) konzentrisch um die zweite Dämpfungskammer (6a) herum angeordnet und vorzugsweise als Ringkammer ausgebildet ist.

12. Pulsationsdämpfer nach einem der Ansprüche 1 bis 11, **dadurch gekennzeichnet, daß** die Ein- und Auslaß-Drosselorgane (9,10) als auswechselbare Einsätze ausgebildet sind.

## Claims

1. Pulsation damper having an inlet connector, an outlet connector (3) and a line connecting them which is connected, inside the pulsation damper, to a plurality of damping chambers which are provided within a damper housing (4), a section of line attached to the inlet connector (2) being connected to the damping chambers in which resiliently elastic damping elements (11) are provided, **characterised in that** the pulsation damper is intended for an oscillating positive-displacement pump and comprises at least two damping chambers (5, 5a, 6, 6a) connected in series inside the damper housing (4), **in that** the section of line (7) attached to the inlet connector (2) has a connecting channel to a first damping chamber (5, 5a) and is connected, via an inlet throttle member (9), to a second damping chamber (6, 6a) which is connected to the outlet connector (3) via an outlet throttle member (10) and **in that** the damping chambers (5, 5a, 6, 6a) are subdivided by means of a separating membrane (12) into a receiving space (13, 14) for damping elements (11) made of resiliently elastic material and into an area (15, 16) which carries a delivery medium.

2. Pulsation damper according to claim 1, **characterised in that** the internal volume of the area (15, 16) of at least the first damping chamber (5, 5a) which carries the delivery medium corresponds at least to the amount delivered by one stroke of the pump.

3. Pulsation damper according to one of claims 1 and 2, **characterised in that** the damping material used inside the receiving space (13, 14) of the damping chambers (5, 5a, 6, 6a) for the damping elements (11) has a substantially linear spring characteristic.

4. Pulsation damper according to one of claims 1 to 3, **characterised in that** the volume of the damping elements (11) corresponds to a multiple, preferably about ten times the amount delivered by one stroke of the pump.

5. Pulsation damper according to one of claims 2 to 4, **characterised in that** the unstressed separating membrane(s) (12) delimiting the area(s) of the damping chamber(s) (5, 5a, 6, 6a) carrying the delivery medium is at a spacing from the damping material (11).

6. Pulsation damper according to one of claims 2 to 5, **characterised in that** the damping elements (11) have a fill capacity which is greater than that of the volume of the receiving space (13, 14) for the damping elements (11) delimited by the separating membrane (12) in its unstressed state and **in that** the separating membrane (12) is pre-stressed by the damping elements (11).

7. Pulsation damper according to one of claims 1 to 6, **characterised in that** the damping elements (11) of the second damping chamber (6, 6a) are more softly elastic than those of the first damping chamber (5, 5a).

8. Pulsation damper according to one of claims 1 to 7, **characterised in that** it comprises a two-part housing (4) having a housing top (17) and a lower housing part (18) and **in that** the separating membrane (12) is disposed in the plane of separation as a sealing element.

9. Pulsation damper according to claim 8, **characterised in that** substantially the inlet and outlet connectors (2, 3), the conducting channels (7, 7a), inlet and outlet throttle members (9, 10) and the regions (15, 16) of the damping chambers (5, 5a, 6, 6a) carrying the delivery medium are provided in the housing top (17) and the receiving spaces (13, 14) for the damping elements (11) are provided in the lower housing part (18).

10. Pulsation damper according to one of claims 1 to 9, **characterised in that** the damper housing (4) is preferably of round construction, **in that** the inlet and outlet connectors (2, 3) are arranged diametrically opposite and have inwardly directed, preferably aligned blind bores (7, 7a), **in that** the damping element receiving spaces (13, 14) each extend over half the base of the housing and **in that** the blind bore (7) connected to the inlet connector (2) extends in the region of the second damping chamber (6, 6a) and is connected to both damping chambers (5, 5a, 6, 6a) and the blind bore (7a) connected to the outlet connector (3) is connected to the second damping chamber (6, 6a) via the outlet throttle member (10).

11. Pulsation damper according to one of claims 1 to 10, **characterised in that** the first damping chamber (5a) is arranged concentrically around the second damping chamber (6a) and is preferably constructed as an annular chamber.

12. Pulsation damper according to one of claims 1 to 11, **characterised in that** the inlet and outlet throttle members (9, 10) are constructed as replaceable inserts.

## Revendications

1. Amortisseur de pulsations comprenant une tubulure d'entrée, une tubulure de sortie (3) et une conduite reliant ces tubulures, qui est raccordée à l'intérieur de l'amortisseur de pulsations à plusieurs chambres d'amortissement qui sont prévues à l'intérieur d'un boîtier d'amortisseur (4), un tronçon de conduite raccordé à la tubulure d'entrée (2) étant relié aux chambres d'amortissement dans lesquelles sont disposés des éléments d'amortissement (11) à élasticité de ressort, **caractérisé en ce que** l'amortisseur de pulsations est prévu pour une pompe volumétrique oscillante et présente au moins deux chambres d'amortissement (5, 5a, 6, 6a) montées en série à l'intérieur du boîtier d'amortisseur (4), **en ce que** le tronçon de conduite (7) raccordé à la tubulure d'entrée (2) présente un canal de liaison vers une première chambre d'amortissement (5, 5a) et est raccordé, par l'intermédiaire d'un organe d'étranglement d'entrée (9), à une deuxième chambre d'amortissement (6, 6a) reliée par l'intermédiaire d'un organe d'étranglement de sortie (10) à la tubulure de sortie (3), et **en ce que** les chambres d'amortissement (5, 5a, 6, 6a) sont, au moyen d'une membrane séparatrice (12), subdivisées en un espace récepteur (13, 14) pour des éléments d'amortissement (11) en matériau à élasticité de ressort et en une région (15, 16) conduisant du fluide débité.

2. Amortisseur de pulsations selon la revendication 1, **caractérisé en ce que** le volume intérieur de la région (15, 16) conduisant du fluide débité d'au moins la première chambre d'amortissement (5, 5a) correspond au moins au débit d'une course de pompe.

3. Amortisseur de pulsations selon la revendication 1 ou 2, **caractérisé en ce que** le matériau d'amortissement utilisé pour les éléments d'amortissement (11) à l'intérieur de l'espace récepteur (13, 14) des chambres d'amortissement (5, 5a, 6, 6a) présente une courbe caractéristique de ressort approximativement linéaire.

4. Amortisseur de pulsations selon l'une des revendications 1 à 3, **caractérisé en ce que** le volume des éléments d'amortissement (11) correspond à un multiple du débit d'une course de pompe, de préférence à environ dix fois ce débit.

5. Amortisseur de pulsations selon l'une des revendications 2 à 4, **caractérisé en ce que** la ou les membranes séparatrices (12) délimitant la ou les régions (15, 16), conduisant du fluide débité, de la ou des chambres d'amortissement (5, 5a, 6, 6a) se trouvent à l'état non sollicité à distance du matériau d'amortissement (11).

6. Amortisseur de pulsations selon l'une des revendications 2 à 5, **caractérisé en ce que** les éléments d'amortissement (11) présentent un volume de remplissage qui est supérieur au volume de l'espace récepteur (13, 14) pour les éléments d'amortissement (11) qui est délimité à l'état non sollicité par la membrane séparatrice (12), et **en ce que** la membrane séparatrice (12) est précontrainte par les éléments d'amortissement (11).

7. Amortisseur de pulsations selon l'une des revendications 1 à 6, **caractérisé en ce que** les éléments d'amortissement (11) de la deuxième chambre d'amortissement (6, 6a) sont plus souples que ceux de la première chambre d'amortissement (5, 5a).

8. Amortisseur de pulsations selon l'une des revendications 1 à 7, **caractérisé en ce qu'**il présente un boîtier (4) en deux parties avec une tête de boîtier (17) et une partie inférieure de boîtier (18), et **en ce que** la membrane séparatrice (12) est disposée dans le plan de séparation comme élément d'étanchéité.

9. Amortisseur de pulsations selon la revendication 8, **caractérisé en ce que** les tubulures d'entrée et de sortie (2, 3), les canaux de conduite (7, 7a), les organes d'étranglement d'entrée et de sortie (9, 10) ainsi que les régions (15, 16) des chambres d'amortissement (5, 5a, 6, 6a) conduisant du fluide débité sont prévues pour l'essentiel dans la tête de boîtier (17), et les espaces récepteurs (13, 14) pour les éléments d'amortissement (11) sont prévus dans la partie inférieure de boîtier (18).

10. Amortisseur de pulsations selon l'une des revendications 1 à 9, **caractérisé en ce que** le boîtier d'amortisseur (4) est de préférence réalisé rond, **en ce que** les tubulures d'entrée et de sortie (2, 3) sont disposées en étant diamétralement opposées et présentent respectivement des perçages borgnes (7, 7a) dirigés vers l'intérieur, de préférence alignés, **en ce que** les espaces (13, 14) récepteurs d'éléments d'amortissement s'étendent respectivement sur environ la moitié de la surface de base du boîtier, et **en ce que** le perçage borgne (7) relié à la tubulure d'entrée (2) s'étend jusque dans la région de la deuxième chambre d'amortissement (6, 6a) et est relié aux deux chambres d'amortissement (5, 5a, 6, 6a), et le perçage borgne (7a) relié à la tubulure de sortie (3) est relié à la deuxième chambre d'amortissement (6, 6a) par l'intermédiaire de l'organe d'étranglement de sortie (10).

11. Amortisseur de pulsations selon l'une des revendications 1 à 10, **caractérisé en ce que** la première chambre d'amortissement (5a) est disposée concentriquement autour de la deuxième chambre d'amortissement (6a) et est réalisée de préférence sous forme de chambre annulaire.

12. Amortisseur de pulsations selon l'une des revendications 1 à 11, **caractérisé en ce que** les organes d'étranglement d'entrée et de sortie (9, 10) sont réalisés sous forme d'inserts échangeables.
